# EUROPEAN PATENT APPLICATION

(11) **EP 4 712 637 A1**
(43) Date of publication of application: **18.03.2026**
(21) Application number: 24803286.4
(22) Date of filing: 25.03.2024
(51) Int. Cl.: H04W 72/0457, H04W 84/12

(54) **COMMUNICATION DEVICE, CONTROL METHOD FOR SAME, AND PROGRAM**

(30) Priority: 11.05.2023 JP 2023078702
(71) Applicant: Canon Kabushiki Kaisha, Tokyo, 146-8501 (JP)
(72) Inventor: YAMAKAWA, Yuichi, Tokyo 146-8501 (JP); INOHIZA, Hirohiko, Tokyo 146-8501 (JP)
(74) Representative: Canon Europe Limited
(86) International application number: PCT/JP2024/011607
(87) International publication number: WO 2024/232171

(57) **Abstract**

A communication device is configured to include first and second interfaces (STA and AP functions) that are communication interfaces capable of being used for communication with mutually-different counterpart devices. The communication device obtains frequency separation information indicating frequency separation between links for enabling an STR operation of transmitting and receiving simultaneously on a plurality of links in a case of performing the multi-link communication. Further, in a case where the second interface is started after the first interface has been started, the communication device selects, based on the frequency separation information, frequency channels to be used on links of the second interface.

## Description

### TECHNICAL FIELD

The present invention relates to a communication device capable of executing multi-link communication using a plurality of parallel links, a method of controlling the same, and a program.

### BACKGROUND ART

The IEEE 802.11 series standards are known as the wireless local area network ("wireless LAN" or "WLAN") communication standards developed by the Institute of Electrical and Electronics Engineers (IEEE). IEEE 802.11 series standards include standards such as the IEEE 802.11a/b/g/n/ac/ax standards and the like. For example, the IEEE 802.11ax standard uses Orthogonal Frequency Division Multiple Access (OFDMA) to standardize techniques for improving communication speeds under congested conditions in addition to providing high peak throughput of up to 9.6 gigabits per second (Gbps) (see Patent Literature (PTL) 1).

The IEEE is also moving forward with the development of the IEEE 802.11be standard to further increase throughput and improve frequency utilization efficiency. The introduction of multi-link communication technology is under consideration with the IEEE 802.11be standard. Multi-link communication is a technique in which one access point (AP)-side communication device (multi-link device; MLD) communicates with one station (STA)-side communication device (MLD) by establishing a plurality of parallel links over mutually-different frequency channels.

In a case where a communication device performs multi-link communication, the communication efficiency can be improved by performing a Simultaneous Transmit and Receive (STR) operation that performs transmission and reception over a plurality of links simultaneously. However, if the frequency channels are close among the plurality of links used in the multi-link communication, interference may arise between the links, and independent communication on each link may become impossible. In this case, the communication device may not be able to perform STR operations using those links in the multi-link communication. To make it possible for the communication device to perform the STR operations, it is necessary to perform frequency separation (separating the frequency channels used between the links in the frequency domain) by separating the frequency channels used on each of the plurality of links.

### CITATION LIST

### PATENT LITERATURE

PTL 1: Japanese Patent Laid-Open No. 2018-50133

### SUMMARY OF INVENTION

### TECHNICAL PROBLEM

In a communication device such as that described above, a plurality of communication interfaces that can be used to communicate with different counterpart devices (e.g., a communication interface that causes the communication device to operate as an access point (AP) and a communication interface that causes the communication device to operate as a station (STA)) can be operated in parallel, and each communication interface may perform multi-link communication. In such a case, it may be desirable to be able to determine the frequency channel used on each link such that STR operations using the plurality of links are possible without the link of each communication interface interfering with or otherwise negatively affecting the links of the other communication interfaces.

### SOLUTION TO PROBLEM

The present disclosure provides a technique that, in a case of operating a plurality of communication interfaces in parallel in a communication device capable of executing multi-link communication, makes it possible to more efficiently determine the frequency channel used on each link.

A communication device according to one aspect of the present disclosure is a communication device capable of executing multi-link communication using a plurality of parallel links established over mutually-different frequency channels, the communication device comprising: first and second interfaces that are communication interfaces capable of being used for communication with mutually-different counterpart devices; obtaining means for obtaining frequency separation information indicating frequency separation between links for enabling an STR operation of transmitting and receiving simultaneously on a plurality of links when in a case of performing the multi-link communication; and selecting means for, when in a case where the second interface is started after the first interface has been started, selecting, based on the frequency separation information, a frequency channels to be used on a links of the second interface.

### ADVANTAGEOUS EFFECTS OF INVENTION

According to the present disclosure, it becomes possible to, in a case of operating a plurality of communication interfaces in parallel in a communication device capable of executing multi-link communication, more efficiently determine the frequency channel used on each link.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
FIG. 1 is a diagram illustrating an example of the configuration of a network.
FIG. 2 is a block diagram illustrating an example of the hardware configuration of a communication device.
FIG. 3 is a block diagram illustrating an example of the functional configuration of the communication device.
FIG. 4 is a flowchart illustrating processing for determining operating channels for an AP function (a first working example).
FIG. 5 is a diagram illustrating an example of processing results from the determination processing (FIG. 4) (the first working example).
FIG. 6 is a flowchart illustrating processing for determining operating channels for an STA function (a second working example).
FIG. 7 is a diagram illustrating an example of processing results from the determination processing (FIG. 6) (the second working example).
FIG. 8A is a flowchart illustrating processing for determining operating channels for an AP function (a third working example).
FIG. 8B is a flowchart illustrating processing for determining operating channels for an AP function (the third working example).
FIG. 9 is a diagram illustrating an example of processing results from the determination processing (FIGS. 8A and 8B) (the third working example).
FIG. 10 illustrates an example of a user interface (UI) screen.

### DESCRIPTION OF EMBODIMENTS

Hereinafter, embodiments will be described in detail with reference to the attached drawings. Note, the following embodiments are not intended to limit the scope of the claimed invention. Multiple features are described in the embodiments, but limitation is not made on an invention that requires all such features, and multiple such features may be combined as appropriate. Furthermore, in the attached drawings, the same reference numerals are given to the same or similar configurations, and a redundant description thereof is omitted.

### <Network Configuration>

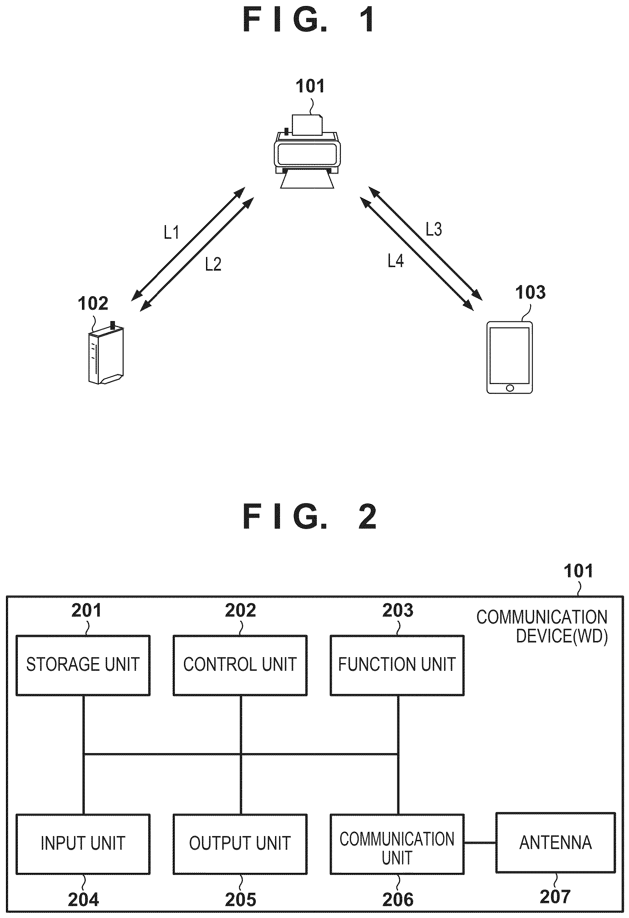

FIG. 1 illustrates an example of the configuration of a wireless network according to an embodiment of the present disclosure. Communication devices 101 to 103 illustrated in FIG. 1 are wireless devices (WDs) having a wireless communication function for communicating wirelessly with an external device.

The communication device 101 can operate as an access point (AP) that has the role of constructing a wireless network. The communication device 101 can further operate as a station (STA) that has the role of joining a wireless network constructed by another AP. In other words, the communication device 101 is configured as a wireless device having an AP function for operating the communication device 101 as an AP, and an STA function for operating the communication device 101 as an STA. The communication device 102 is configured as a wireless device having an AP function, and the communication device 102 is configured as a wireless device having an STA function. Hereinafter, the communication device 101 is also referred to as "WD 101"; the communication device 102, as "AP 102"; and the communication device 103, as "STA 103". Although illustrated as separate communication devices in the example in FIG. 1, the AP 102 and the STA 103 may be implemented as an AP function and an STA function in the same communication device.

In the example in FIG. 1, the WD 101 joins the wireless network constructed by the AP 102 by using the STA function to connect wirelessly to the AP 102 as an STA. The WD 101 also constructs a wireless network using the AP function. The STA 103 joins the wireless network constructed by the AP function of the WD 101 by wirelessly connecting to the WD 101 as an STA. Accordingly, the WD 101 and the AP 102 communicate wirelessly using signals transmitted and received by the WD 101 as the STA. Additionally, the WD 101 and the STA 103 communicate wirelessly using signals transmitted and received by the WD 101 as the AP.

The communication devices 101 to 103 (the WD 101, the AP 102, and the STA 103) support the IEEE 802.11be (Extremely High Throughput or Extreme High Throughput; EHT) standard, which is a successor standard to the IEEE 802.11ax (High Efficiency) standard, as a wireless LAN communication standard. Each communication device is capable of wireless communication compliant with the IEEE 802.11be standard. In addition, each communication device is configured to be capable of performing wireless communication in multiple frequency bands (2.4 GHz, 5 GHz, and 6 GHz bands, in the present embodiment). The frequency bands that each communication device can use are not limited to these, and different frequencies may be used, such as the 60 GHz band or the like, for example. In addition, each communication device is configured to be capable of communicating using a bandwidth of 20 MHz, 40 MHz, 80 MHz, 160 MHz, 320 MHz, and the like. The bandwidths that each communication device can use are not limited to these, and different bandwidths may be used, such as 240 MHz and 4 MHz, for example.

In the present embodiment, the communication devices 101 to 103 support at least the IEEE 802.11be standard in the IEEE 802.11 standard series. The communication devices 101 to 103 may further support at least one legacy standard in the IEEE 802.11 standards prior to the IEEE 802.11be standard. The legacy standards are the IEEE 802.11a/b/g/n/ac/ax standards.

In addition to the IEEE 802.11 standard series, the communication devices 101 to 103 may support other communication standards such as Bluetooth^{®}, Near Field Communication (NFC), Ultra Wide Band (UWB), Zigbee, Multi Band OFDM Alliance (MBOA), or the like. UWB includes wireless USB, wireless 1394, Winet, and the like. The communication devices 101 to 103 may further support communication standards for wired communication, such as wired LAN or the like.

The communication devices 101 to 103 are multi-link devices (MLDs) having a function for executing multi-link communication, in which a plurality of links (transmission paths) are established and communication is performed over a corresponding plurality of frequency channels. An AP that performs multi-link communication is also referred to as an "AP MLD", and an STA that performs multi-link communication is also referred to as a "non-AP MLD" or a "STA MLD". In multi-link communication, a plurality of links are established and used between the AP MLD and the STA MLD.

In multi-link communication, the plurality of links to be established between the communication devices (between the AP MLD and the STA MLD) are established on mutually-different frequency channels. The channel spacing of the frequency channels on which each of the plurality of links is established can be at least greater than 20 MHz. Here, "frequency channel" is a frequency channel defined in the IEEE 802.11 standard series, and refers to a frequency channel over which wireless communication compliant with the IEEE 802.11 standard series can be executed. The IEEE 802.11 standard series defines multiple frequency channels in each of the 2.4 GHz, 5 GHz, 6 GHz, and 60 GHz frequency bands. In addition, the IEEE 802.11 standard series defines the bandwidth of each frequency channel as 20 MHz. By bonding one frequency channel to an adjacent frequency channel, a bandwidth of 40 MHz or more may be used in a single frequency channel.

In the example in FIG. 1, two links L1 and L2 are established in parallel between the WD 101 and the AP 102. Additionally, two links L3 and L4 are established in parallel between the WD 101 and the STA 103. For example, the WD 101 establishes a link over a first frequency channel in the 5 GHz band as the link L1, and establishes a link over a second frequency channel in the 5 GHz band as the link L2. This enables the WD 101 to communicate with the AP 102 over both links L1 and L2. In this case, the WD 101 maintains the link L2 over the second frequency channel in parallel with the link L1 over the first frequency channel.

In this manner, the WD 101 can improve the throughput in communication with the AP 102 by establishing a plurality of links with the AP 102 over a corresponding plurality of frequency channels and performing multi-link communication. Likewise, the WD 101 can improve the throughput in communication with the STA 103 by establishing a plurality of links with the STA 103 (the links L3 and L4, in the example in FIG. 1) over a corresponding plurality of frequency channels and performing multi-link communication.

Note that a plurality of links over different frequency bands (e.g., a link in the 5 GHz band and a link in the 6 GHz band) may be established as the plurality of links to be established for the multi-link communication between the communication devices. Alternatively, a plurality of links, each over a plurality of different channels, may be established in the same frequency band. For example, two links may be established over channel 7 and channel 207, respectively, in the 6 GHz band.

In addition, a plurality of links in the same frequency band and links in different frequency bands may be mixed as the plurality of links to be established for multi-link communication. For example, two links may be established over channel 36 and channel 149, respectively, in the 5 Ghz band, and one link may be established over channel 15 in the 6 GHz band. By establishing a plurality of links over different frequency bands between the communication devices in this manner, even in a case where a certain frequency band is congested, communicating over the links established in the other frequency bands makes it possible to prevent reduced throughput and communication delay.

The communication devices 101 to 103 (the WD 101, the AP 102, and the STA 103) can be, for example, wireless LAN routers, personal computers (PCs), cameras, tablet terminals, PCs, smartphones, mobile phones, headsets, video cameras, or the like, but are not limited thereto. The communication devices 101 to 103 may be information processing devices including wireless chips or the like capable of executing wireless communication compliant with the IEEE 802.11be standard. Note that FIG. 1 illustrates an example in which the WD 101 is a printer, the AP 102 is a wireless LAN router, and the STA 103 is a smartphone.

### <Hardware Configuration of Communication Device>

FIG. 2 is a block diagram illustrating an example of the hardware configuration of the communication device 101 (the WD 101). The WD 101 includes a storage unit 201, a control unit 202, a function unit 203, an input unit 204, an output unit 205, a communication unit 206, and at least one antenna 207. Note that the AP 102 and the STA 103 can have the same hardware configuration as the WD 101.

The storage unit 201 is constituted by one or more memories such as a Read Only Memory (ROM) and/or a Random Access Memory (RAM). The storage unit 201 stores various information such as computer programs for performing various operations (described later), communication parameters for wireless communication, and the like. Other types of storage media, such as flexible disks, hard disks, optical disks, magneto-optical disks, CD-ROMs, CD-Rs, magnetic tape, non-volatile memory cards, DVDs, and the like, may be used for the one or more memories constituting the storage unit 201. The storage unit 201 may include a plurality of memories and the like.

The control unit 202 is constituted by one or more processors such as a Central Processing Unit (CPU) and/or a Micro Processing Unit (MPU). The control unit 202 controls the WD 101 as a whole by reading out and executing the computer programs stored in the storage unit 201. The control unit 202 may be configured to control the WD 101 as a whole in cooperation with the computer programs and an operating system (OS) stored in the storage unit 201. The control unit 202 may include a plurality of processors, e.g., may be multi-core, and may be configured to control the WD 101 as a whole using the plurality of processors.

The control unit 202 generates data or signals (wireless frames) to be transmitted in communication with other communication devices. The control unit 202 further controls the function unit 203 to execute predetermined processing, such as wireless communication, image capturing, printing, projection, and the like. The function unit 203 is hardware for the WD 101 to execute the predetermined processing.

The input unit 204 accepts various operations from a user. The output unit 205 makes various outputs to the user through a monitor screen or a speaker. Here, the output by the output unit 205 can be one or more of a display on the monitor screen, audio output through the speaker, vibration output, and the like. The input unit 204 and the output unit 205 may be implemented as a single module, such as a touchscreen. Additionally, the input unit 204 and the output unit 205 may each be configured as an integral part of the WD 101, or separate from the WD 101.

The communication unit 206 controls wireless communication compliant with the IEEE 802.11be standard. The communication unit 206 controls the at least one antenna 207 to transmit and receive signals for wireless communication generated by the control unit 202. The WD 101 transmits and receives various data, such as image data, document data, video data, and the like, through communication with the communication device 102 via the communication unit 206.

Note that in addition to the IEEE 802.11be standard, the communication unit 206 may be configured to control wireless communication compliant with other IEEE 802.11 standards, as well as wired communication over a wired LAN or the like. If the WD 101 supports an NFC standard, a Bluetooth standard, or the like in addition to the IEEE 802.11be standard, it may also be configured to control wireless communication compliant with those communication standards as well. If the WD 101 is configured to be capable of executing wireless communication compliant with a plurality of communication standards, it may include the separate communication units and antennas for the different communication standards.

The at least one antenna 207 is an antenna capable of communication in a predetermined frequency band (the 2.4 GHz, 5 GHz, and 6 GHz bands, in the present embodiment). The WD 101 may have a separate antenna for each frequency band. If the WD 101 includes a plurality of antennas, a corresponding communication unit 206 may be provided for each antenna. The antenna 207 may be provided separately from the communication unit 206 as illustrated in FIG. 2, or may be configured as a single module together with the communication unit 206.

In the WD 101 of the present embodiment, the above-described AP function and the STA function are implemented as separate communication interfaces that can be used to communicate with different counterpart devices. The communication unit 206 is configured including such a plurality of communication interfaces.

### <Functional Configuration of Communication Device>

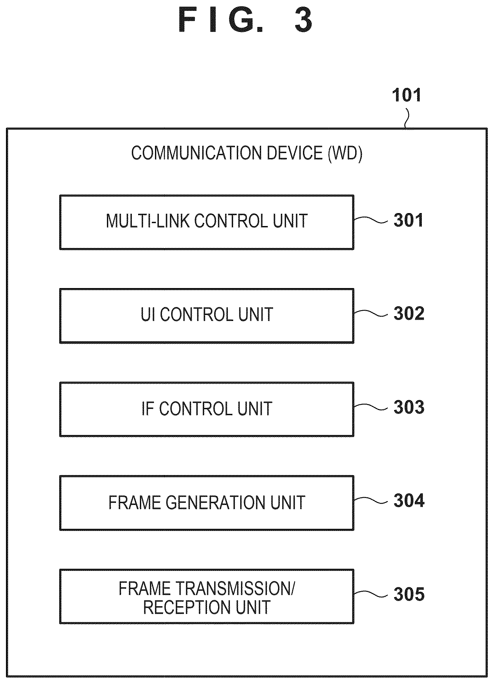

FIG. 3 is a block diagram illustrating an example of the functional configuration of the communication device 101 (the WD 101) according to the present embodiment. The WD 101 includes, as functional units, a multi-link control unit 301, a user interface (UI) control unit 302, an interface (IF) control unit 303, a frame generation unit 304, and a frame transmission/reception unit 305.

The multi-link control unit 301 performs control related to multi-link communication. For example, the multi-link control unit 301 controls connection processing for establishing one or more links used for wireless communication with a counterpart AP (e.g., the AP 102) through the STA function or wireless communication with a counterpart STA (e.g., the STA 103) through the AP function. The multi-link control unit 301 further controls processing for adding or removing links after communication has started, and communication termination processing for removing all of the links. Specifically, the connection processing includes authentication processing, association processing, and four-way handshake (4WHS) processing.

The UI control unit 302 controls the input unit 204 and the output unit 205 to accept user operations through a touch panel or the like, and to output information to the user (through displays in a screen, outputting audio, or the like). For example, using a screen displayed by the output unit 205, the UI control unit 302 accepts touch panel operations from the user through the input unit 204. The UI control unit 302 makes various types of settings in accordance with the accepted user operations, and saves setting data indicating the settings in the storage unit 201.

The IF control unit 303 controls individual communication interfaces (communication IFs) that can be used to communicate with corresponding different counterpart devices. For example, the IF control unit 303 controls the starting and stopping of each communication IF (the AP function or the STA function). The IF control unit 303 also manages the IP addresses used by each communication IF, and determines the radio frequency (frequency channel) based on the user settings.

The frame generation unit 304 generates MAC frames, including management frames such as Beacons, Probe Requests, Probe Responses, Authentication Requests, Association Requests, or the like, as well as data frames. The frame transmission/reception unit 305 transmits wireless frames, including the MAC frames generated by the frame generation unit 304, and receives wireless frames from partner devices (counterpart devices).

### <Processing Sequence>

First to third working examples will be described hereinafter as examples of the processing sequence executed by the WD 101 described above. The first to third working examples will describe examples of processing for, in the WD 101, determining operating channels for a function that is to be started in a case where one function (communication IF) of the STA function and the AP function is already operating and the other function (communication IF) is then started.

### [First Working Example]

The first working example will describe an example in which the AP function is started after the STA function has been started first. Accordingly, in the present working example, the STA function corresponds to a first communication IF (a first interface) that is started first, and the AP function corresponds to a second communication IF (a second interface) that is started after.

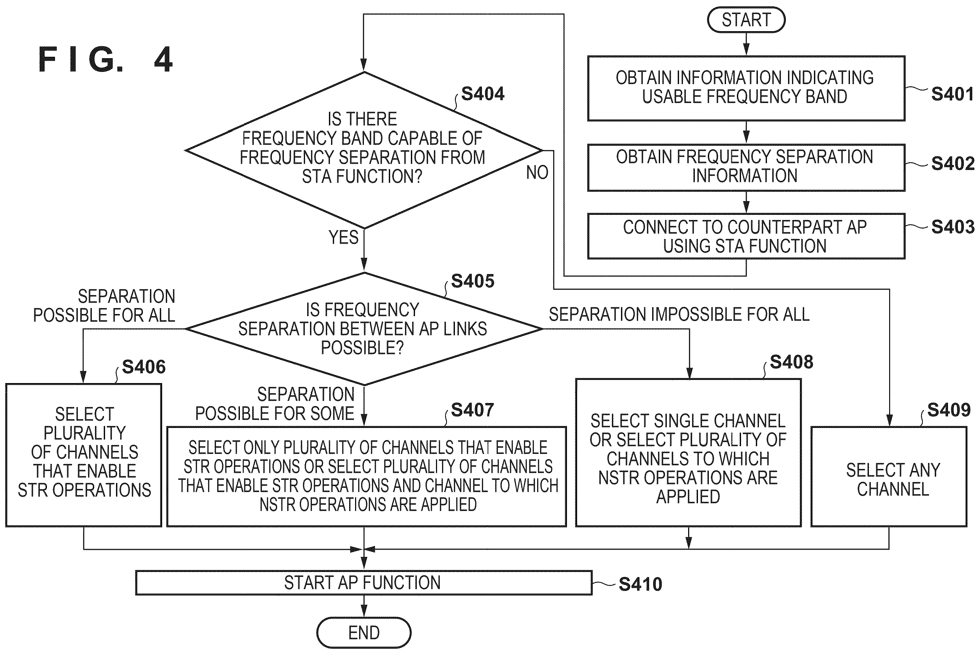

FIG. 4 is a flowchart illustrating an example of a sequence of processing for determining operating channels for the AP function when the WD 101 starts the STA function first, connects to the counterpart AP (the AP 101) as an STA, and then furthermore starts the AP function, in the first working example. This sequence can be started, for example, in response to the power supply or the wireless function (the wireless LAN function) of the WD 101 being turned on.

In S401, the WD 101 obtains information indicating frequency bands that the WD 101 itself is capable of using when operating as an STA or an AP (frequency band information) before use of the wireless LAN is started. This is to handle different limitations for the frequency bands of available radio waves that depend on the country or region.

Furthermore, in S402, the WD 101 obtains frequency separation information indicating frequency separation between links for enabling Simultaneous Transmit and Receive (STR) operations, in which transmission and reception are performed over a plurality of links simultaneously, ina case of performing multi-link communication. "STR" means that transmission (reception) on link 2 can be performed in parallel with transmission (reception) on link 1 in a common period. "NSTR (Non-STR)" means that only reception (transmission) can be performed on link 2 during transmission (reception) on link 1 in the common period. In the present embodiment, "frequency separation" is equivalent to separating the frequency channels used on the plurality of links (separating the frequency channels used among the links, in the frequency domain) such that the communication device can perform the STR operations. The frequency separation information includes information pertaining to how far apart (the center frequencies of) the frequency channels used must be between the two links for the STR operations using the two links to be possible. Accordingly, the frequency separation information indicates the frequency separation required to enable the STR operations in the multi-link communication.

If the frequency channels are close among the plurality of links used in the multi-link communication (if the difference between the center frequencies of the frequency channels is small), interference may arise between the links, and independent communication on each link may become impossible. In this case, the communication device cannot perform STR operations using those links in the multi-link communication. In other words, if the frequency channels are close among the links, the communication device can only perform NSTR (Non-STR) operations using those links, and it may not be possible to fully achieve the performance provided by the multi-link communication.

Accordingly, in the present embodiment, the WD 101 obtains the frequency separation information in S402, and selects the frequency channels to be used on the links of the AP function on the basis of the obtained frequency separation information. In other words, in a case where the AP function (the second communication IF) is activated after the STA function (the first communication IF) is activated, the WD 101 selects (determines) the frequency channels to be used on the links of the AP function (the second communication IF) on the basis of the frequency separation information. More specifically, the WD 101 selects the frequency channels to be used on the links of the AP function (the second communication IF) on the basis of the frequency separation information such that frequency separation is performed from the links of the STA function (the first communication IF) and frequency separation is performed between the links of the AP function (the second communication IF). This enables more efficient frequency channel selection.

The frequency separation information can be obtained, for example, on the basis of the performance or limitations of the hardware (the wireless LAN modules, chips, or the like) used in the WD 101. For example, in the 2.4 GHz band, between adjacent channels (e.g., channel 1 and channel 2), the bands used by those channels partially overlap, and communication that is independent for each link therefore cannot be performed. Limitations can therefore arise, such as the need to separate (the center frequencies of) the frequency channels used by at least 20 MHz between the links. The frequency separation information can be obtained on the basis of such limitations.

In addition, the frequency separation information can be communicated from another communication devices using a management frame such as a Beacon, a Probe Request, a Probe Response, or the like of the wireless LAN standard. For example, the frequency separation information can be communicated using the Capability of the Non-AP MLD, the Capability of the NSTR Mobile AP MLD, the Frequency Separation For STA of the MLD Capabilities and Operations subfield, the NSTR indication Bitmap frame of the Link info field no Per-STA Profile sub-element, and the like. The frequency separation information can be obtained in such a manner.

The present working example assumes, as an example, that the frequency separation information obtained by the WD 101 indicates that the STR operations are possible by separating (the center frequencies of) the frequency channels used by 80 MHz between the links.

Next, in S403, the WD 101 connects to the counterpart AP (in this example, the AP 102) using the STA function on the basis of frequency band information and the frequency separation information. Specifically, the WD 101 selects channels on the basis of the frequency separation information in frequency bands which the WD 101 itself is capable of using. At that time, the WD 101 selects a plurality of frequency channels which ensure frequency separation for the STR operations. If such frequency channels cannot be selected, the WD 101 selects a single frequency channel for a single link. The WD 101 connects to the counterpart AP through the STA function by using the selected frequency channels.

Then, in S404 to S410, the WD 101 attempts to start the AP function. To do so, it is necessary to select frequency channels to be used by the AP function. At this point, the STA function is already operating (S403). In this case, it is desirable for the WD 101 to select frequency channels to be used by the AP function such that the STA function and the AP function can perform independent operations using the independent frequency channels.

In the present working example, the WD 101 performs a first determination of determining whether, in frequency bands that the WD 101 (the communication device) is capable of using, frequency channels for which the frequency separation from the frequency channels currently being used on the links of the STA function (the first communication IF) is possible can be selected (S404). The WD 101 further performs a second determination of determining whether, in frequency bands for which the frequency separation from the frequency channels currently being used on the links of the STA function is possible, frequency separation between links of the AP function is possible when frequency channels used on the links of the AP function are selected (S405). The WD 101 selects the frequency channels to be used on the links of the AP function (the second communication IF) in accordance with the determination results of the first determination and the second determination.

First, in S404, the WD 101 determines whether the frequency bands which the WD 101 itself is capable of using include frequency bands for which frequency separation from the STA function (i.e., frequency separation from the frequency channels currently being used on all the links of the STA function) is possible (that is, whether the frequency channel can be selected). This determination is made on the basis of the frequency band information (S401), the frequency separation information (S402), and information pertaining to the frequency channels of all the links established for the STA function in S403. The sequence moves to S405 if the WD 101 determines that frequency band for which frequency separation from the STA function is present, and to S409 if not.

If no frequency band for which frequency separation from the STA function is possible is present (frequency separation from the STA function is not possible), interference with the frequency channels currently being used by the STA function will arise regardless of which frequency channel is selected for the AP function. Accordingly, in S409, the WD 101 selects any frequency channels in the usable frequency bands. In the present working example, no particular limitations are placed on the selection of the frequency channels for the AP function in such a case.

In this manner, the WD 101 executes the processing of S409 in accordance with a determination result indicating that frequency channels for which frequency separation from the frequency channels currently being used on the links of the STA function is possible cannot be selected in the frequency band the WD 101 is capable of using. In S409, the WD 101 selects any frequency channels in the frequency bands the WD 101 is capable of using, regardless of the frequency channels currently being used on the links of the STA function.

When frequency bands for which frequency separation from the STA function is possible is present, in S405, the WD 101 determines whether frequency separation between links of the AP function (AP links) is possible, in a case where the AP function uses (establishes) a plurality of links and performs multi-link communication. Specifically, the WD 101 determines whether frequency separation is possible for all links with respect to a maximum number of links that can be established by the AP function, whether frequency separation is possible only for some of the links, or whether frequency separation is impossible for all the links. This determination is made on the basis of the frequency band information (S401), the frequency separation information (S402), and information pertaining to the frequency channels of all the links established for the STA function. Note that if the AP function uses a single link, the frequency separation may be determined to be impossible for all the links.

In S405, if the WD 101 determines that frequency separation is possible for all the links, the sequence moves to S406. In S406, the WD 101 selects a plurality of frequency channels that ensure frequency separation (i.e., a plurality of frequency channels that enable STR operations) for the links to be established by the AP function. The frequency channel selection is performed in frequency bands for which frequency separation from the STA function is possible. By establishing a plurality of links of the AP function over the plurality of frequency channels selected in S406, frequency separation is ensured between the links of the STA function and all the links of the AP function.

In this manner, the process of S406 is executed in accordance with a determination result indicating that (i) frequency channel for which frequency separation from frequency channels currently being used on links of the STA function is possible can be selected and (ii) frequency separation between links is possible for all links with respect to the maximum number of links the AP function is capable of establishing. In S406, the WD 101 selects the frequency channel to be used on each link such that frequency separation is performed between the plurality of links of the AP function.

In S405, if the WD 101 determines that frequency separation is possible for only some of the links, the sequence moves to S407. In S407, the WD 101 selects a plurality of frequency channels that ensure frequency separation (i.e., a plurality of frequency channels that enable STR operations) for some of the links (among the maximum number of links) to be established by the AP function. The frequency channel selection is performed in frequency bands for which frequency separation from the STA function is possible. By establishing a plurality of links of the AP function over the plurality of frequency channels selected in S407, frequency separation is ensured between the link of the STA function and the plurality of links of the AP function (some of the links among the maximum number of links).

In this manner, the processing of S407 is executed in accordance with a determination result indicating that (i) frequency channels for which frequency separation from the frequency channels currently being used on links of the STA function is possible can be selected and (ii) frequency separation between links is possible for some links with respect to the maximum number of links the AP function is capable of establishing. In S407, the WD 101 selects the frequency channel to be used on each link such that frequency separation is performed between some of the links of the AP function in the frequency channel or frequency band capable of frequency separation from the frequency channels currently being used on the links of the STA function.

Alternatively, in S407, the WD 101 may further select frequency channels in which NSTR operations are applied (frequency channel for which frequency separation is not possible) for the links other than the stated some links, in addition to the plurality of frequency channels that enable the STR operations. In this manner, in S407, the WD 101 may further select a frequency channel that is not capable of frequency separation for establishing a further link in addition to the some links by the AP function in a frequency channel or frequency band capable of frequency separation from the frequency channels currently being used on the link of the STA function.

In S405, if the WD 101 determines that frequency separation is not possible for all the links, the sequence moves to S408. In S408, the WD 101 selects a single frequency channel for establishing a single link by the AP function. The frequency channel selection is performed in a frequency band capable of frequency separation from the STA function. By establishing a single link for the AP function over the single frequency channel selected in S408, frequency separation is ensured between the link for the STA function and the single link for the AP function.

In this manner, the processing of S408 is executed in accordance with a determination result indicating that (i) frequency channels for which frequency separation from frequency channels currently being used on links of the STA function is possible can be selected and (ii) frequency separation between links is not possible for all links with respect to the maximum number of links the AP function is capable of establishing. In S408, the WD 101 selects a single frequency channel for establishing a single link by the AP function in a frequency channel or frequency band for which frequency separation from the frequency channels currently being used on the links of the STA function is possible.

Alternatively, in S408, the WD 101 may select a plurality of frequency channels to which the NSTR operations are applied instead of a single frequency channel. As a result, although STR operations cannot be performed, multi-link communication through NSTR operations can be performed using a plurality of links established for the AP function. In this manner, the WD 101 may select a plurality of frequency channels for which frequency separation is not possible for establishing a plurality of links by the AP function in a frequency channel or frequency band for which separation from frequency channels currently being used on the links of the STA function is possible.

Once the frequency channel selection in any of S406 to S409 is complete, the WD 101 moves the sequence to S410. In S410, the WD 101 starts the AP function in a state where the selected frequency channels can be used as the operating channels, and ends the processing of the sequence in FIG. 4. Through such a sequence, the WD 101 is capable of appropriately determining the operating channels for the AP function and starting the AP function while the STA function is operating first.

### <Specific Examples>

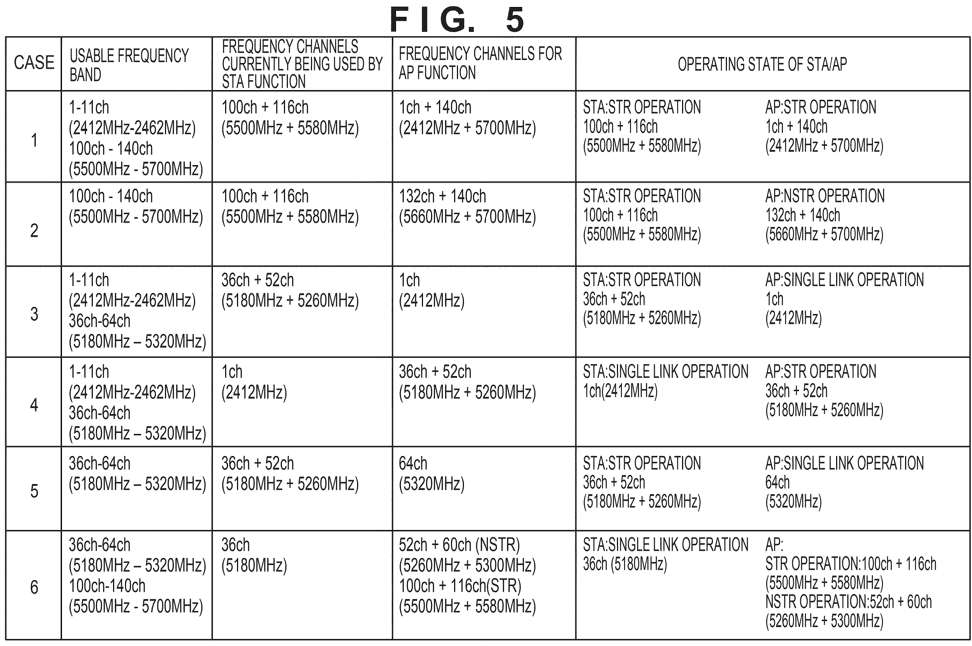

Next, specific examples of the processing for determining the operating channels for the AP function, performed through the sequence in FIG. 4, will be described with reference to FIG. 5. FIG. 5 illustrates an example of processing results from the processing for determining the operating channels for the AP function (FIG. 4). FIG. 5 illustrates six cases for the usable frequency bands, the frequency channels currently being used by the STA function, the frequency channels determined as the operating channels for the AP function, and the operating states of the STA function and the AP function after the AP function is started, indicated by the frequency band information (S401).

The example in FIG. 5 assumes that each link of the STA and the AP functions has a bandwidth of 20 MHz, and that the frequency separation information (S402) indicates that the STR operations can be performed by separating (the center frequencies of) the frequency channels used by 80 MHz between the links. The maximum number of links for the STA function and the AP function is 2 for Cases 1 to 5 and 4 for Case 6.

### (Case 1)

In Case 1, the WD 101 is connected to the counterpart AP (the AP 102) using two links, and is performing STR operations in the multi-link communication using the two links (S403). In addition, the frequency bands that can be used include the 2412-2462 MHz band and the 5660-5700 MHz band as frequency bands frequency separation from the frequency channels (frequency band) currently being used by the STA function is possible ("YES" in S404).

In the stated frequency bands, frequency channels of the maximum number of links, in which the center frequencies are separated from each other by at least 80 MHz, can be selected (i.e., frequency separation is possible for all of the links of the maximum number of links). Accordingly, the WD 101 moves the sequence from S405 to S406. In this example, the WD 101 determines the operating channels for the AP function by selecting channel 1 (center frequency: 2412 MHz) and channel 140 (center frequency: 5700 MHz) or which frequency separation is possible (S406), and starts the AP function (S410). As a result, the WD 101 becomes capable of executing the multi-link communication in which the STR operations are applied, for both the STA function and the AP function.

### (Case 2)

In Case 2, the WD 101 is connected to the counterpart AP (the AP 102) using two links, and is performing STR operations in the multi-link communication using the two links (S403). In addition, the frequency band that can be used includes the 5660-5700 MHz band as a frequency band for which frequency separation from the frequency channels (frequency band) currently being used by the STA function is possible ("YES" in S404).

In the stated frequency band, a plurality of frequency channels in which the center frequencies are separated from each other by at least 80 MHz cannot be selected (frequency separation is not possible for all the links). Accordingly, the WD 101 moves the sequence from S405 to S408. In this example, the WD 101 determines the operating channels for the AP function by selecting channel 132 (5660 MHz) and channel 140 (5700 MHz) as the frequency channels in which the NSTR operations are applied (S408), and starts the AP function (S410). As a result, the WD 101 performs multi-link communication in which the STR operations are applied for the STA function, and performs multi-link communication in which the NSTR operations are applied for the AP function.

### (Case 3)

In Case 3, the WD 101 is connected to the counterpart AP (the AP 102) using two links, and is performing STR operations in the multi-link communication using the two links (S403). In addition, the frequency band that can be used includes the 2412-2462 MHz band as a frequency band for which frequency separation from the frequency channels (frequency band) currently being used by the STA function is possible ("YES" in S404).

In the stated frequency band, a plurality of frequency channels in which the center frequencies are separated from each other by at least 80 MHz cannot be selected (frequency separation is not possible for all the links). Accordingly, the WD 101 moves the sequence from S405 to S408. In this example, the WD 101 determines the operating channel for the AP function by selecting channel 1 (2412 MHz) as a single frequency channel for operating using a single link (S408), and starts the AP function (S410). As a result, the WD 101 performs multi-link communication in which the STR operations are applied for the STA function, and performs communication on a single link for the AP function.

### (Case 4)

In Case 4, the WD 101 is connected to the counterpart AP (the AP 102) using a single link, and is performing STR operations in multi-link communication using the single link (S403). In addition, the frequency band that can be used includes the 5180-5320 MHz band as a frequency band for which frequency separation from the frequency channels (frequency band) currently being used by the STA function is possible ("YES" in S404).

In the stated frequency bands, frequency channels of the maximum number of links, in which the center frequencies are separated from each other by at least 80 MHz, can be selected (i.e., frequency separation is possible for all of the links of the maximum number of links). Accordingly, the WD 101 moves the sequence from S405 to S406. In this example, the WD 101 determines the operating channels for the AP function by selecting channel 36 (5180 MHz) and channel 52 (5260 MHz) for which frequency separation is possible (S406), and starts the AP function (S410). As a result, the WD 101 can execute multi-link communication in which the STR operations are applied for the AP function while performing communication on a single link for the STA function.

### (Case 5)

In Case 5, the WD 101 is connected to the counterpart AP (the AP 102) using two links, and is performing STR operations in the multi-link communication using the two links (S403). In addition, the frequency band that can be used does not include a frequency band for which frequency separation from the frequency channels (frequency band) currently being used by the STA function is possible ("NO" in S404). Accordingly, the WD 101 moves the sequence from S404 to S409.

The WD 101 determines the operating channel for the AP function by selecting channel 64 (5320 MHz) as a given frequency channel (S409), and starts the AP function (S410). As a result, the WD 101 performs communication on a single link for the AP function, while performing multi-link communication in which the STR operations are applied for the STA function.

### (Case 6)

In Case 6, the WD 101 is connected to the counterpart AP (the AP 102) using a single link, and is performing STR operations in multi-link communication using the single link (S403). In addition, the frequency bands that can be used include the 5260-5320 MHz band and the 5500-5700 MHz band as frequency bands for which frequency separation from the frequency channels (frequency band) currently being used by the STA function is possible ("YES" in S404).

As described above, the maximum number of links of the AP function is 4, but in the stated frequency bands, only two frequency channels can be selected as frequency channels in which the center frequencies are separated from each other by at least 80 MHz (i.e., frequency separation is possible only for some of the four links corresponding to the maximum number of links). Accordingly, the WD 101 moves the sequence from S405 to S407.

In this example, the WD 101 selects channel 100 (5500 MHz) and channel 116 (5580 MHz) as the frequency channels for the STR operations. The WD 101 further selects channel 52 (5260 MHz) and channel 60 (5300 MHz) as the frequency channels for the NSTR operations. Through this, the WD 101 determines the operating channels for the AP function (S407) and starts the AP function (S410). As a result, the WD 101 performs multi-link communication using the link in which the STR operations are applied and the link in which the NSTR operations are applied for the AP function, while performing communication on a single link for the STA function. Note that in this example, it is also possible to enable only the links in which the STR operations are applied.

As described above, the WD 101 according to the present working example is configured to include first and second communication IFs (the STA function and the AP function), which are communication IFs that can be used to communicate with mutually-different counterpart devices. The WD 101 obtains frequency separation information indicating frequency separation between links for enabling the STR operations, in which transmission and reception are performed over a plurality of links simultaneously, in a case of performing multi-link communication. Furthermore, when the AP function (the second communication IF) is started after the STA function (the first communication IF) is started, the WD 101 selects the frequency channels to be used on the links of the AP function (the second communication IF) on the basis of the frequency separation information.

In this manner, according to the present working example, when the STA function is started first and the AP function is started after to operate simultaneously with the STA function, the channels to be used by the AP function can be selected appropriately. This makes it possible to achieve efficient communication in multi-link communication by the WD 101.

### [Second Working Example]

The first working example described an example in which the STA function is started first and a connection is made with the counterpart AP, after which the AP function is started and operated simultaneously with the STA function. The second working example will describe an example in which the AP function is started first, after which the STA function is started and a connection is made with the counterpart AP. Accordingly, in the present working example, the AP function corresponds to a first communication IF (a first interface) that is started first, and the STA function corresponds to a second communication IF (a second interface) that is started after. The following descriptions will focus upon the parts different from the first working example.

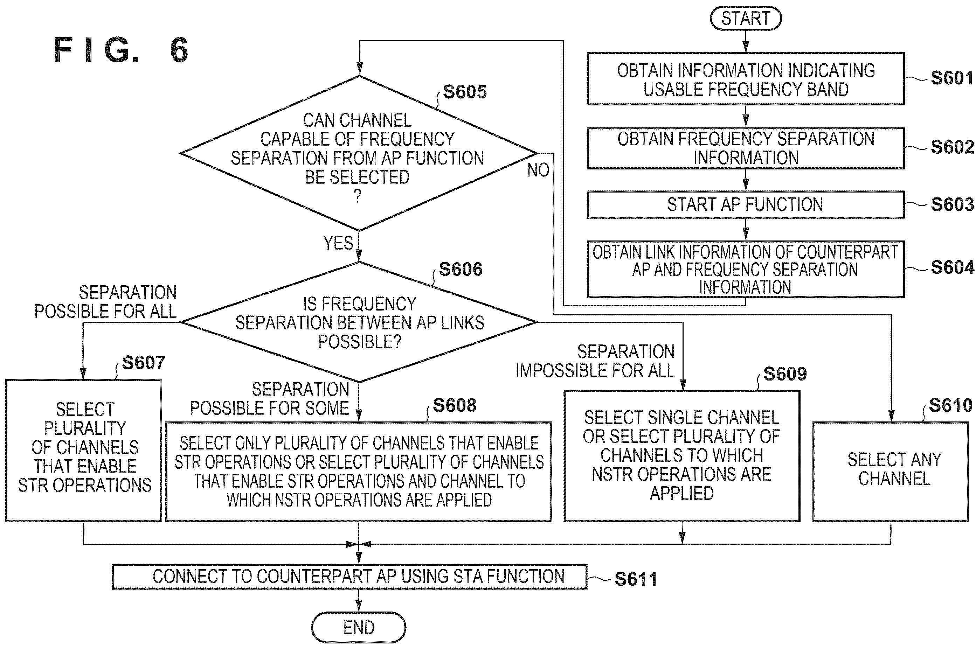

FIG. 6 is a flowchart illustrating an example of a sequence of processing for determining an operating channel for the STA function when the WD 101 starts the AP function first, and then starts the STA function and connects to the counterpart AP (the AP 101) as an STA. As in the first working example (FIG. 4), this sequence can be started, for example, in response to the power supply or the wireless function (the wireless LAN function) of the WD 101 being turned on.

In S601, the WD 101 obtains information indicating frequency bands the WD 101 itself is capable of using when operating as an STA or an AP (frequency band information) before use of the wireless LAN is started, as in S401. Furthermore, in S602, the WD 101 obtains frequency separation information indicating frequency separation for STR operations in multi-link communication. In the present working example, the AP function is started first in the WD 101, and thus the frequency separation information can be obtained, for example, on the basis of the performance or limitations of the hardware (the wireless LAN modules, chips, or the like) used in the WD 101.

Next, in S603, the WD 101 transitions to a state in which a connection from another communication device operating as an STA (e.g., the STA 103) can be accepted by starting the AP function on the basis of the frequency band information and the frequency separation information. Specifically, on the basis of the frequency separation information, the WD 101 selects a plurality of frequency channels that ensure frequency separation for the STR operations from a plurality of frequency channels that can be used (a plurality of frequency channels included in a frequency band that the WD 101 itself is capable of using).

Note that if the AP function does not have a plurality of links (does not perform multi-link communication), the WD 101 may select any frequency channel in the usable frequency band indicated by the frequency band information without taking the STR operations into account. In this case, the WD 101 starts the AP function so as to operate on a link over the selected frequency channel.

After the AP function is started, in S604, the WD 101 starts the STA function and performs a search for an AP, and obtains the link information and the frequency separation information of the counterpart AP (e.g., the AP 101) necessary for connecting to the counterpart AP as the STA. The AP search is performed using a management frame, such as a Beacon, a Probe Response, or the like, transmitted from a counterpart AP, for example. Link information of the counterpart AP includes information pertaining to the frequency channels that can be used in the STA function, such as the number of links that can be used in the counterpart AP, the frequencies (frequency channels) used in the links, the frequency bandwidth used in the links, and the like. Note that if the counterpart AP is started as an AP MLD, it is assumed that a plurality of frequency channels that ensure frequency separation are being used. In this case, information indicating a minimum value for frequency separation (e.g., 20 MHz), for example, may be obtained as the frequency separation information of the counterpart AP. In this manner, in S604, the WD 101 collects information related to links that can be used in communication with the counterpart AP through the STA function of the WD 101 (the link information and the frequency separation information).

Then, in S605 to S611, the WD 101 attempts to connect to the counterpart AP through the STA function. In S605 to S611, the same processing as that performed in S404 to S410 of the first working example is performed, and in the present working example, the link information of the counterpart AP is further taken into account. In the first working example, more desirable channels are selected from a plurality of channel candidates that can be used by the AP function, whereas in the second working example, channels are selected from a plurality of channels being used by the counterpart AP to be connected.

In the present working example, the WD 101 performs a first determination of determining whether, in frequency bands the WD 101 (the communication device) is capable of using, frequency channels for which the frequency separation from the frequency channels currently being used on the links of the AP function (the first communication IF) is possible can be selected (S605). The WD 101 further performs a second determination of determining whether, in frequency bands for which the frequency separation from the frequency channels currently being used on the links of the AP function is possible, frequency separation between links of the STA function is possible when the frequency channel used on the link of the STA function is selected (S405). The WD 101 selects the frequency channels to be used on the links of the STA function (the second communication IF) in accordance with the determination results of the first determination and the second determination.

In S605, as in the first working example, frequency channels to be used by the STA function are selected such that the AP function that is already operating and the STA function that is started after can perform independent operations using independent frequency channels. Specifically, the WD 101 determines whether, among the frequency bands the WD 101 itself is capable of using, frequency channels for which frequency separation from the AP function is possible (i.e., frequency separation from the frequency channels currently being used on all links of the AP function) can be selected for the STA function. This determination is made on the basis of the frequency band information (S601), the frequency separation information (S602), information pertaining to the frequency channels of all the links being used by the AP function started in S603, and the link information of the counterpart AP (S604). The sequence moves to S606 if the WD 101 determines that frequency channels for which frequency separation from the AP function is possible can be selected for the STA function, and to S610 if not.

If no frequency channel for which frequency separation from the AP function is possible is present (frequency separation from the AP function is not possible), interference with the frequency channels currently being used by the AP function will arise regardless of which frequency channel is selected for the STA function. Accordingly, in S610, the WD 101 selects any frequency channel (from the frequency channels that can be used by the counterpart AP) in the usable frequency band. In the present working example, no particular limitations are placed on the selection of the frequency channel for the STA function in such a case.

In this manner, the WD 101 executes the processing of S610 in accordance with a determination result indicating that frequency channels for which frequency separation from the frequency channels currently being used on the links of the AP function is possible cannot be selected in the frequency bands the WD 101 is capable of using. In S610, the WD 101 selects any frequency channel in the frequency bands the WD 101 is capable of using regardless of the frequency channels currently being used on the links of the AP function.

In a case where frequency bands for which frequency separation from the AP function is possible is present, in S606, the WD 101 determines whether frequency separation between links of the STA function (STA links) is possible, in a case where the STA function uses (establishes) a plurality of links and performs multi-link communication. Specifically, the WD 101 determines whether frequency separation is possible for all links with respect to a maximum number of links that can be established by the STA function, whether frequency separation is possible only for some links, or whether frequency separation is impossible for all links. This determination is made on the basis of the frequency band information (S601), the frequency separation information (S602), information pertaining to the frequency channels of all the links being used by the AP function, and the link information of the counterpart AP (S604). Note that if the STA function uses a single link, the frequency separation may be determined to be impossible for all the links.

In S606, if the WD 101 determines that frequency separation is possible for all the links, the sequence moves to S607. In S607, the WD 101 selects a plurality of frequency channels that ensure frequency separation (i.e., a plurality of frequency channels that enable STR operations) for the links to be established by the STA function. The frequency channel selection is performed in frequency bands for which frequency separation from the AP function is possible. By establishing a plurality of links for the STA function over corresponding ones of the plurality of frequency channels selected in S607, frequency separation is ensured between the link for the AP function and all the links for the STA function.

In this manner, the processing of S607 is executed in accordance with a determination result indicating that (i) frequency channels for which frequency separation from frequency channels currently being used on links of the AP function can be selected and (ii) frequency separation between links is possible for all links with respect to the maximum number of links the STA function is capable of establishing. In S607, the WD 101 selects the frequency channel to be used on each link such that frequency separation is performed between the plurality of links of the STA function.

In S606, if the WD 101 determines that frequency separation is possible for only some of the links, the sequence moves to S608. In S608, the WD 101 selects a plurality of frequency channels that ensure frequency separation (i.e., a plurality of frequency channels that enable STR operations) for some of the links (among the maximum number of links) to be established by the STA function. The frequency channel selection is performed in frequency bands for which frequency separation from the AP function is possible. By establishing a plurality of links for the STA function over corresponding ones of the plurality of frequency channels selected in S608, frequency separation is ensured between the link for the AP function and the plurality of links for the STA function (some of the links among the maximum number of links).

In this manner, the processing of S608 is executed in accordance with a determination result indicating that (i) frequency channels for which frequency separation from frequency channels currently being used on links of the AP function is possible can be selected and (ii) frequency separation between links is possible for some links with respect to the maximum number of links the STA function is capable of establishing. In S608, the WD 101 selects the frequency channel to be used on each link such that frequency separation is performed between some of the links of the STA function in the frequency channel or frequency band capable of frequency separation from the frequency channels currently being used on the links of the AP function.

Alternatively, in S608, the WD 101 may further select frequency channels to which the NSTR operations are applied for the other links, in addition to the plurality of frequency channels that enable the STR operations. In this manner, in S608, the WD 101 may further select frequency channels for which frequency separation is not possible for the STA function to establish a further link in addition to the some links, in frequency channels or frequency bands for which frequency separation from the frequency channels currently being used on the links of the AP function is possible.

In S606, if the WD 101 determines that frequency separation is not possible for all the links, the sequence moves to S609. In S609, the WD 101 selects a single frequency channel for establishing a single link by the STA function. The frequency channel selection is performed in a frequency band for which frequency separation from the AP function is possible. By establishing a single link for the STA function over the single frequency channel selected in S609, frequency separation is ensured between the link for the AP function and the single link for the STA function.

In this manner, the processing of S609 is executed in accordance with a determination result indicating that (i) frequency channels for which frequency separation from frequency channels currently being used on links of the AP function is possible can be selected and (ii) frequency separation between links is not possible for all links with respect to the maximum number of links the STA function is capable of establishing. In S609, the WD 101 selects a single frequency channel for the STA function to establish a single link in a frequency channel or frequency band for which frequency separation from the frequency channels currently being used on the links of the AP function is possible.

Alternatively, in S609, the WD 101 may select a plurality of frequency channels to which the NSTR operations are applied instead of a single frequency channel. As a result, although STR operations cannot be performed, multi-link communication through NSTR operations can be performed using a plurality of links established for the STA function. In this manner, the WD 101 may select a plurality of frequency channels for which frequency separation is not possible for establishing a plurality of links by the STA function, in frequency channels or frequency bands for which frequency separation from frequency channels currently being used on links of the AP function is possible.

Once the frequency channel selection in any of S607 to S610 is complete, the WD 101 moves the sequence to S611. In S611, the WD 101 connects to the counterpart AP by using the selected frequency channels as the operating channels, and ends the processing of the sequence in FIG. 6. Through such a sequence, the WD 101 is capable of appropriately determining the operating channels for the STA function and connecting with the counterpart AP while the AP function is operating first.

### <Specific Examples>

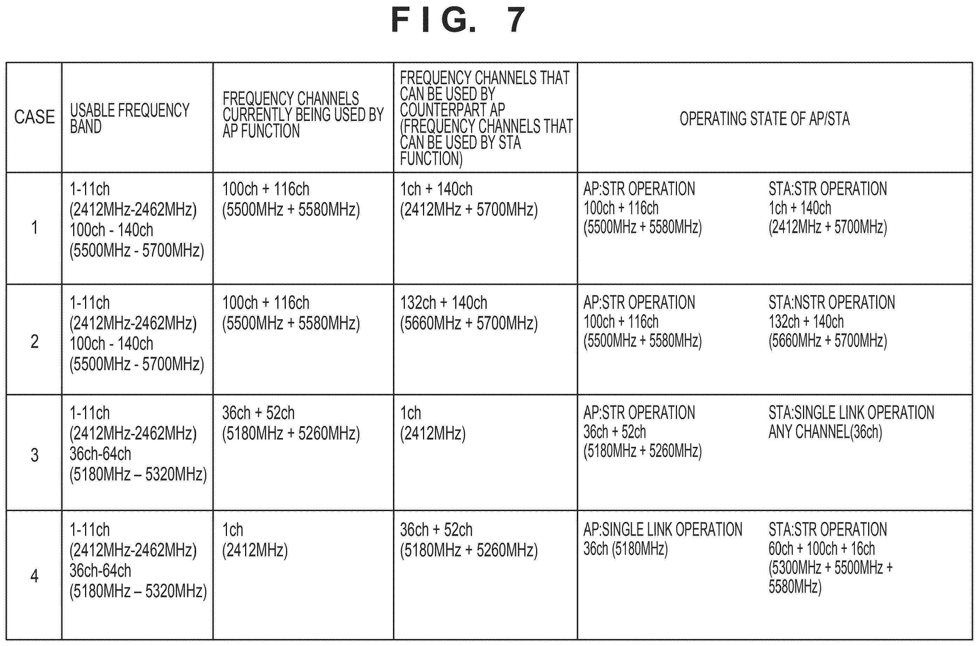

Next, specific examples of the processing for determining the operating channels for the STA function, performed through the sequence in FIG. 6, will be described with reference to FIG. 7. FIG. 7 illustrates an example of processing results from the processing for determining the operating channels for the STA function (FIG. 6). FIG. 7 illustrates four cases for the usable frequency bands, the frequency channels currently being used by the AP function, the frequency channels that can be used by the counterpart AP, and the operating states of the STA function and the AP function after the STA function is started 'after the connection to the counterpart AP is complete), indicated by the used frequency band information (S601).

The example in FIG. 7 assumes that each link of the STA and the AP functions has a bandwidth of 20 MHz, and that the frequency separation information (S602) indicates that the STR operations can be performed by separating (the center frequencies of) the frequency channels used by 80 MHz between the links. The maximum number of links for the STA function and the AP function is 2 for Cases 1 to 3 and 4 for Case 4.

### (Case 1)

In Case 1, the WD 101 is in the state of starting the AP function using the two links (S603). In addition, the frequency bands that can be used include the 2412-2462 MHz band and the 5660-5700 MHz band as frequency bands for which frequency separation from the frequency channels (frequency band) currently being used by the AP function is possible. In addition, the frequency band further includes channel 1 (2412 MHz) and channel 140 (5700 MHz) as frequency channels that can be used by the STA function (frequency channels that can be used by the counterpart AP) ("YES" in S605).

Frequency separation is ensured for the frequency channels 1 (2412 MHz) and 140 (5700 MHz) that can be used by the STA function (the center frequencies are separated by at least 80 MHz). In other words, frequency separation is possible for all the links among the maximum number of links (two links). Accordingly, the WD 101 moves the sequence from S606 to S607. In this example, the WD 101 determines the operating channels for the STA function by selecting channel 1 (2412 MHz) and channel 140 (5700 MHz) (S607), and connects with the counterpart AP (S611). As a result, the WD 101 becomes capable of executing the multi-link communication in which the STR operations are applied, for both the STA function and the AP function.

### (Case 2)

In Case 2, the WD 101 is in the state of starting the AP function using the two links (S603). In addition, the frequency bands that can be used include the 2412-2462 MHz band and the 5660-5700 MHz band as frequency bands for which frequency separation from the frequency channels (frequency band) currently being used by the AP function is possible. Furthermore, the stated frequency band further includes channel 132 (5660 MHz) and channel 140 (5700 MHz) as frequency channels that can be used by the STA function ("YES" in S605).

Frequency separation is not ensured for the frequency channels 132 (5660 MHz) and 140 (5700 MHz) that can be used by the STA function (the center frequencies are not separated by at least 80 MHz). In other words, frequency separation is not possible for all the links among the maximum number of links (two links). Accordingly, the WD 101 moves the sequence from S606 to S609. In this example, the WD 101 determines the operating channels for the STA function by selecting channel 132 (5660 MHz) and channel 140 (5700 MHz) as the frequency channels to which the NSTR operations are applied (S607), and connects with the counterpart AP (S611). As a result, the WD 101 performs multi-link communication in which the STR operations are applied for the AP function, and performs multi-link communication in which the NSTR operations are applied for the STA function.

### (Case 3)

In Case 3, the WD 101 is in the state of starting the AP function using the two links (S603). In addition, the frequency band that can be used does not include a frequency band for which frequency separation from the frequency channels (frequency band) currently being used by the AP function is possible ("NO" in S605). Accordingly, the WD 101 moves the sequence from S605 to S610.

In this example, the WD 101 determines the operating channels for the STA function by selecting, from frequency channel 36 (5180 MHz) and channel 64 (5320 MHz) available for the STA function, channel 36 (5180 MHz) as a given frequency channel (S610), and connects with the counterpart AP (S611). As a result, the WD 101 performs communication on a single link for the STA function, while performing multi-link communication in which the STR operations are applied for the AP function.

### (Case 4)

In Case 4, the WD 101 is in the state of starting the AP function using a single link (S603). In addition, the frequency bands that can be used include the 5260-5320 MHz band and the 5500-5700 MHz band as frequency bands for which frequency separation from the frequency channels (frequency band) currently being used by the AP function is possible. Furthermore, the stated frequency band further includes channel 52 (5260 ch), channel 60 (5300 MHz), channel 100 (5500 MHz), and channel 116 (5580 MHz) as frequency channels that can be used by the STA function ("YES" in S605).

Of the stated frequency channels, frequency separation is not ensured between channel 52 (5260 ch) and channel 60 (5300 MHz) (the center frequencies are not separated by at least 80 MHz). In other words, as described above, the maximum number of links of the STA function is 4, but frequency separation is possible only for some of the four links corresponding to the maximum number of links. Accordingly, the WD 101 moves the sequence from S606 to S608.

In this example, the WD 101 selects channel 60 (5300), channel 100 (5500 MHz), and channel 116 (5580 MHz) as the frequency channels for the STR operations. Through this, the WD 101 determines the operating channels for the STA function (S608), and connects with the counterpart AP (S611). As a result, the WD 101 can perform multi-link communication using the links to which the STR operations are applied for the STA function, while performing communication on a single link for the AP function.

As described above, the WD 101 according to the present working example is configured to include first and second communication IFs (the AP function and the STA function), which are communication IFs that can be used to communicate with mutually-different counterpart devices. The WD 101 obtains frequency separation information indicating frequency separation between links for enabling the STR operations, in which transmission and reception are performed over a plurality of links simultaneously, when performing multi-link communication. Furthermore, when the STA function (the second communication IF) is started after the AP function (the first communication IF) is started, the WD 101 selects the frequency channels to be used on the links of the STA function (the second communication IF) on the basis of the frequency separation information.

In this manner, according to the present working example, when the AP function is started first and the STA function is started after to operate simultaneously with the AP function, the channel to be used by the STA function can be selected appropriately. This makes it possible to achieve efficient communication in multi-link communication by the WD 101.

### [Third Working Example]

In the first and second working examples, among the AP function and the STA function (the first and second communication IFs), the function (communication IF) started earlier is prioritized with respect to the execution of multi-link communication in which the STR operations are applied. However, a case is conceivable in which, for example, multi-link communication in which the STR operations are applied is to be performed with the AP function prioritized over the STA function, regardless of the order in which the functions are started.

Accordingly, the third working example will describe an example of processing in which performing multi-link communication in which the STR operations are applied is prioritized for the function (the communication IF), among the AP function and the STA function (the first and second communication IFs), that is started later. Although the present working example describes processing performed in a case where, as in the first working example, the STA function and the AP function are started in that order, the same applies to processing performed in a case where the functions are started in the reverse order (in the order of the AP function and the STA function). The following descriptions will focus upon the parts different from the first and second working examples.

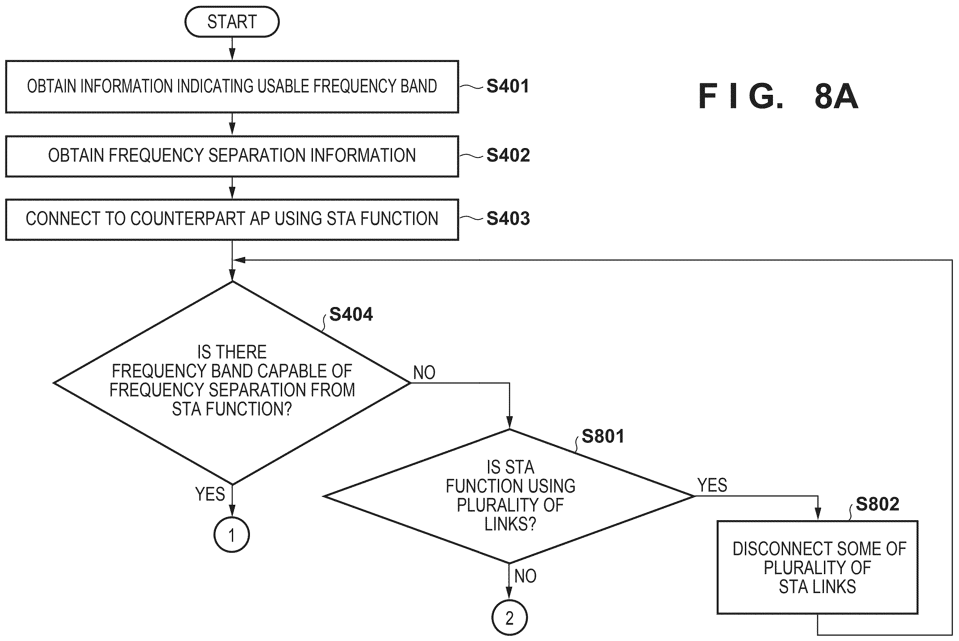

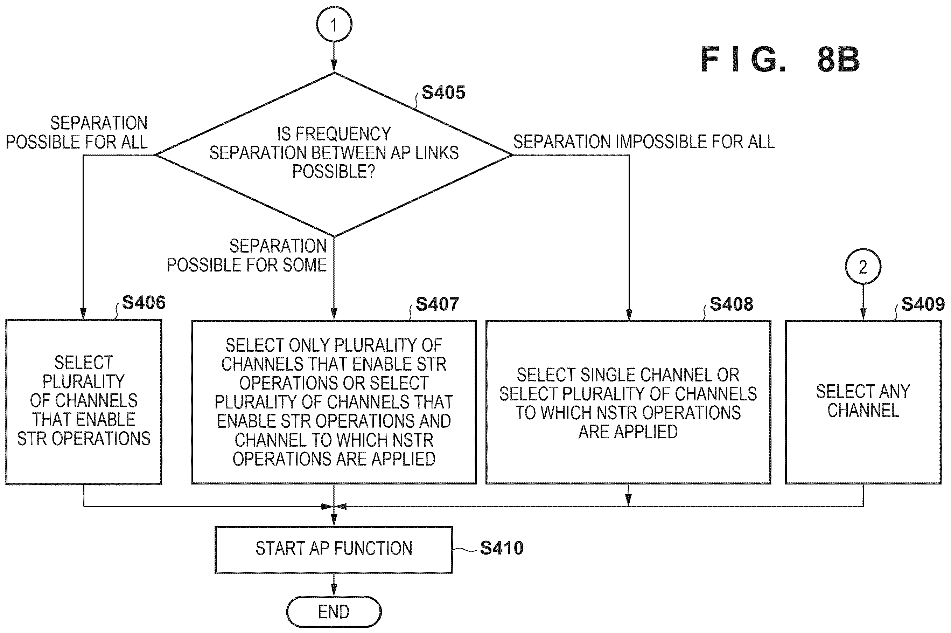

FIGS. 8A and 8B are flowcharts illustrating an example of a sequence of processing for determining operating channels for the AP function when the WD 101 starts the STA function first, connects to the counterpart AP (the AP 101) as an STA, and then furthermore starts the AP function, in the third working example. This sequence can be started, for example, in response to the power supply or the wireless function (the wireless LAN function) of the WD 101 being turned on. Note that in FIGS. 8A and 8B, steps in which the same processing as in the first working example is performed are given the same reference signs as in FIG. 4, and S801 and S802 are added.

The same processing as that of the first working example is performed in S401 to S410. However, in the present working example, after the STA function has been started first, if in S404 the WD 101 determines that, among the frequency bands the WD 101 itself can use, there is no frequency band for which frequency separation from the STA function is possible, the sequence moves to S801.

In S801, the WD 101 determines whether the STA function started first is using a plurality of links (is connected to the counterpart AP over a plurality of parallel links). If the STA function is using a single link, the WD 101 moves the sequence to S409, and then performs the same processing as in the first working example. However, if the STA function is using a plurality of links, the WD 101 moves the sequence to S802.

In S802, the WD 101 disconnects one of the plurality of links used by the STA function (the STA links), and returns the sequence to S404. Through this, by opening the frequency channel being used by the STA function, the AP function started after can select the frequency channel for performing multi-link communication in which the STR operations are applied, with priority over the STA function started first. The STA link to be disconnected may be selected on the basis of the information obtained in S401 to S403 (or S601 to S604) such that the AP function started later can perform the STR operations. Once the disconnection of the one STA link is complete, in S404, the WD 101 repeats the same determination processing as in the first working example.

Although FIGS. 8A and 8B illustrate an example in which the sequence moves to S801 in a case where a determination of "NO" is made in S404, the configuration is not limited thereto. For example, in S405, if it is determined that frequency separation is possible only for some links or that frequency separation is impossible for all links, the sequence of FIGS. 8A and 8B may be changed such that the sequence moves to S801. In this case, if the STA function is using a single link in S801, the sequence moves to S407 or S408. However, if the STA function is using a plurality of links, the sequence moves to S802, and after the processing of S802 is complete, the sequence returns to S404.

### <Specific Examples>

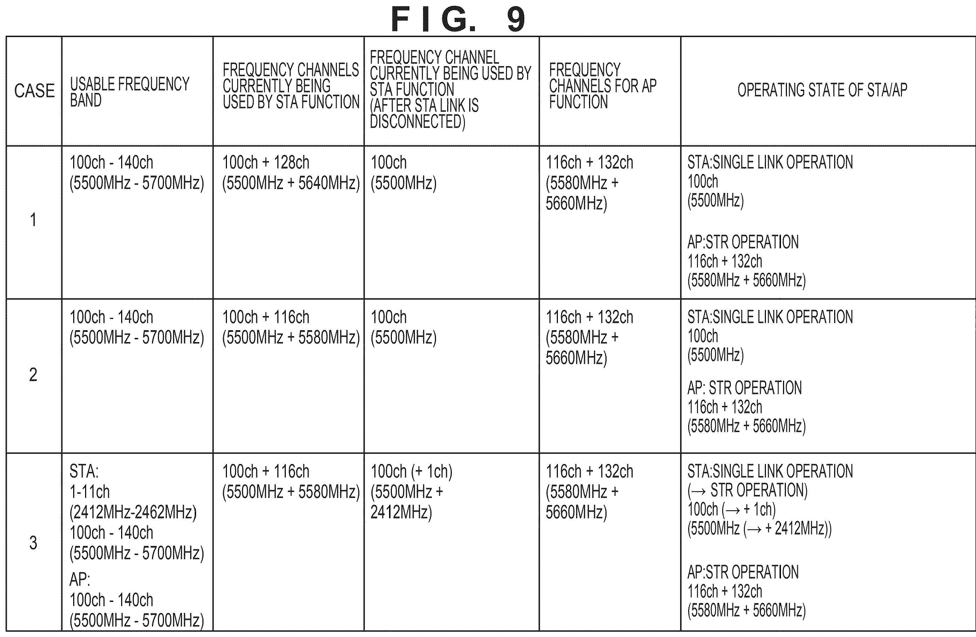

Next, specific examples of the processing for determining the operating channels for the AP function, performed through the sequence in FIGS. 8A and 8B, will be described with reference to FIG. 9. FIG. 9 illustrates an example of processing results from the processing for determining the operating channels for the AP function (FIGS. 8A and 8B). FIG. 9 illustrates three cases for the usable frequency bands, the frequency channels currently being used by the STA function, the frequency channels currently being used by the STA function after the one STA link is disconnected, and the operating states of the STA function and the AP function after the AP function is started, indicated by the frequency band information (S401).

The example in FIG. 9 assumes that each link of the STA and the AP functions has a bandwidth of 20 MHz, and that the frequency separation information (S402) indicates that the STR operations can be performed by separating (the center frequencies of) the frequency channels used by 80 MHz between the links. The maximum number of links for each of the STA function and the AP function is 2.

### (Case 1)

Case 1 corresponds to the sequence in FIGS. 8A and 8B (when the sequence moves to S801 after a determination of "NO" is made in S404). In Case 1, the WD 101 is connected to the counterpart AP (the AP 102) using two links, and is performing STR operations in the multi-link communication using the two links (S403). In addition, the frequency bands that can be used does not include a frequency band for which frequency separation from the frequency channels (frequency band) currently being used by the STA function is possible ("NO" in S404). Accordingly, the WD 101 moves the sequence from S404 to S801.

Because the STA function uses two links, corresponding to two frequency channels 100 (5500 MHz) and 128 (5640 MHz), the WD 101 moves the sequence from S801 to S802. Of the two links, the WD 101 disconnects the link corresponding to channel 128 (5640 MHz) (S802). As a result, of the frequency bands the WD 101 is capable of using, the 5580-5700 MHz band is the frequency band for which frequency separation from the frequency channels (the frequency band) currently being used by the STA function is possible ("YES" in S404).

In this example, the WD 101 determines the operating channels for the AP function by selecting channel 116 (5580 MHz) and channel 132 (5660 MHz) in the stated frequency band (S406), and starts the AP function (S410). As a result, the WD 101 operates on a single link over channel 100 (5500 MHz) for the STA function. On the other hand, for the AP function, STR operations can be performed on two links over channel 116 (5580 MHz) and channel 132 (5660 MHz), respectively.

### (Case 2)

Case 2 corresponds to the sequence of FIGS. 8A and 8B being changed such that the sequence moves to S801 if, in S405, it is determined that frequency separation is possible only for some links or that frequency separation is impossible for all the links. The WD 101 is connected to the counterpart AP (the AP 102) using two links, and is performing the STR operations in multi-link communication using the two links (S403). In addition, the frequency band that can be used includes the 5660-5700 MHz band as a frequency band for which frequency separation from the frequency channels (frequency band) currently being used by the STA function is possible ("YES" in S404).

In the stated frequency band, a plurality of frequency channels in which frequency separation is secured cannot be selected (frequency separation is not possible for all the links). Accordingly, the WD 101 moves the sequence from S405 to S801.

Because the STA function uses two links, corresponding to two frequency channels 100 (5500 MHz) and 116 (5580 MHz), the WD 101 moves the sequence from S801 to S802. Of the two links, the WD 101 disconnects the link corresponding to channel 116 (5580 MHz) (S802). As a result, of the frequency bands the WD 101 is capable of using, the 5580-5700 MHz band is the frequency band for which frequency separation from the frequency channels (the frequency band) currently being used by the STA function is possible ("YES" in S404).

In this example, the WD 101 determines the operating channels for the AP function by selecting channel 116 (5580 MHz) and channel 132 (5660 MHz) to ensure frequency separation between the two links for the AP function in the stated frequency band (S406). Furthermore, the WD 101 starts the AP function (S410). As a result, the WD 101 operates on a single link over channel 100 (5500 MHz) for the STA function. On the other hand, for the AP function, STR operations can be performed on two links over channel 116 (5580 MHz) and channel 132 (5660 MHz), respectively.

### (Case 3)

Case 3 is an example in which the STA function reconnects the links after determining the operating channels for the AP function, as a variation on Case 2. Note that as illustrated in FIG. 9, Case 3 differs from Case 2 in that the STA function is capable of using a frequency channel in the 2.4 GHz band in addition to a frequency channel in the 5 GHz band.

In Case 3, as in Case 2, the link corresponding to channel 116 (5580 MHz), which was used by the STA function, is disconnected. Furthermore, channel 116 (5580 MHz) and channel 132 (5660 MHz) are selected as the operating channels for the AP function, and the AP function is started. Furthermore, in Case 3, the WD 101 searches for a frequency channel that can be used for the STA function, and establishes a new link with the counterpart AP over a different frequency channel from the frequency channel to be used as the disconnected link. This processing is realized by the processing from S605 on in the sequence illustrated in FIG. 6.

Specifically, in S605, the WD 101 determines that frequency channels in the 2.4 GHz band (channels 1 to 11) and channel 100 (5500 MHz) can be selected as frequency channels for the STA function for which frequency separation from the AP function is possible. Accordingly, the WD 101 moves the sequence to S606. The WD 101 further determines the operating channels for the STA function by selecting channel 1 (2412 MHz) and channel 100 (5500 MHz) (S607), and connects with the counterpart AP (S611). As a result, multi-link communication in which the STR operations are applied can be executed for both the STA function and the AP function.

According to the present working example, when the STA function and the AP function are started, the STR operations can be preferentially performed by the function started later.

### [Other Embodiments]

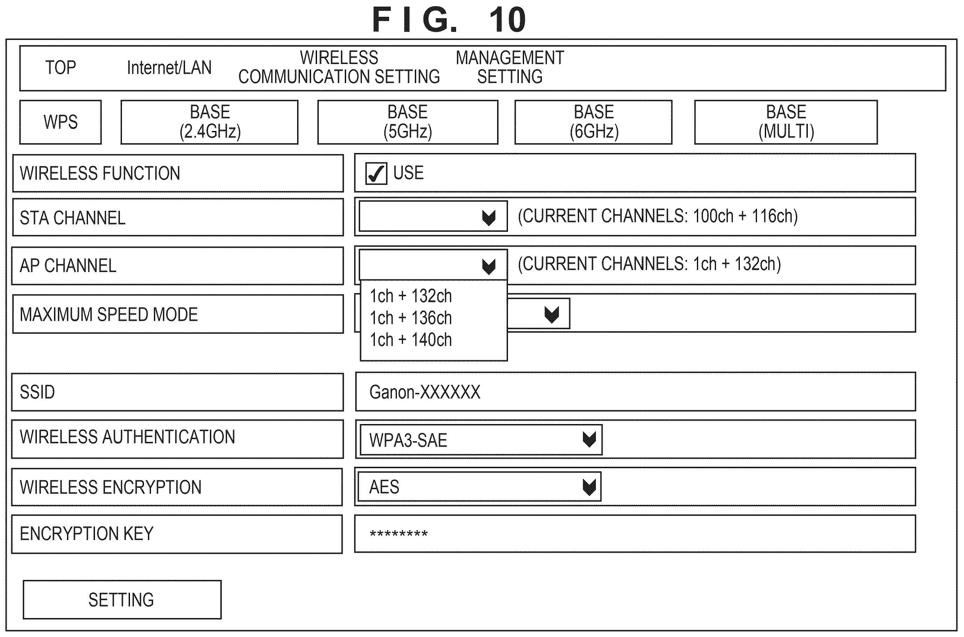

In each of the foregoing working examples, the WD 101 may select the operating channels of the AP function or the STA function in accordance with a user selection made through a user interface (UI). For example, a UI screen (a settings screen) such as that illustrated in FIG. 10 may be displayed by the output unit 205 of the WD 101, and the user selection may be accepted through the input unit 204. The WD 101 may display only a plurality of channel candidates that can be selected in the UI screen, and accept the user selection.

Additionally, although each of the foregoing working examples describes an example of selecting operating channels for the STA function and the AP function, the present invention is not limited thereto. For example, a Peer to Peer (P2P) function, a Neighbor Awareness Networking (NAN) function, and the like are known as wireless LAN functions. The operating channels can be selected through the same processing as in the foregoing working examples even when using such functions.

In the first to third working examples, among the STA function and the AP function, the function that is started first is the first communication IF, and the function that is started after is the second communication IF. For example, in the first working example, the first communication I is constituted by the STA function and the second communication IF is constituted by the AP function, and in the second working example, the first communication IF is constituted by the AP function and the second communication IF is constituted by the STA function. As a variation on the first to third working examples, the first communication IF and the second communication IF may be constituted by any two combinations of the STA function, the AP function, the P2P function, and the NAN function. For example, the first communication IF may be constituted by the P2P function, and the second communication IF may be constituted by the AP function. Alternatively, the first communication IF may be constituted by the NAN function, and the second communication IF may be constituted by the STA function. The same processing as in the first to third working examples can be implemented, and the same effects can be achieved, even when such a configuration is adopted.

The present invention can be implemented by processing of supplying a program for implementing one or more functions of the above-described embodiments to a system or apparatus via a network or storage medium, and causing one or more processors in the computer of the system or apparatus to read out and execute the program. The present invention can also be implemented by a circuit (for example, an ASIC) for implementing one or more functions.

The present invention is not limited to the above embodiments and various changes and modifications can be made within the spirit and scope of the present invention. Therefore, to apprise the public of the scope of the present invention, the following claims are made.

This application claims priority from Japanese Patent Application No. 2023-078702, filed May 11, 2023, which is hereby incorporated by reference herein.

## Claims

1. A communication device capable of executing multi-link communication using a plurality of parallel links established over mutually-different frequency channels, the communication device comprising:
first and second interfaces that are communication interfaces capable of being used for communication with mutually-different counterpart devices;
obtaining means for obtaining frequency separation information indicating frequency separation between links for enabling an STR operation of transmitting and receiving simultaneously on a plurality of links in a case of performing the multi-link communication; and
selecting means for, in a case where the second interface is started after the first interface has been started, selecting, based on the frequency separation information, frequency channels to be used on links of the second interface.

2. The communication device according to claim 1,
wherein the selecting means selects, based on the frequency separation information, the frequency channels to be used on the links of the second interface such that the frequency separation is performed from links of the first interface and the frequency separation is performed between links of the second interface.

3. The communication device according to claim 1 or 2,
wherein the selecting means:
performs a first determination of determining whether, in a frequency band that the communication device is capable of using, a frequency channel for which the frequency separation from frequency channels currently being used on links of the first interface is possible can be selected;
performs a second determination of determining whether, in a frequency channel or a frequency band for which the frequency separation from frequency channels currently being used on links of the first interface is possible, frequency separation between links of the second interface is possible when frequency channels used on links of the second interface are selected; and
selects the frequency channels to be used on the links of the second interface in accordance with determination results of the first determination and the second determination.

4. The communication device according to claim 3,
wherein in the first determination, the selecting means determines whether frequency channels for which the frequency separation from frequency channels currently being used on all links of the first interface is possible can be selected.

5. The communication device according to claim 3 or 4,
wherein in accordance with a determination result indicating that (i) frequency channels for which the frequency separation from frequency channels currently being used on links of the first interface is possible can be selected and (ii) the frequency separation between links is possible for all links with respect to a maximum number of links the second interface is capable of establishing,
the selecting means selects a frequency channel to be used on each link such that the frequency separation is performed between a plurality of links of the second interface in frequency channels or frequency bands for which the frequency separation from the frequency channels currently being used on the links of the first interface is possible.

6. The communication device according to any one of claims 3 to 5,
wherein in accordance with a determination result indicating that (i) frequency channels for which the frequency separation from a frequency channels currently being used on links of the first interface is possible can be selected and (ii) the frequency separation between links is possible for some links with respect to a maximum number of links the second interface is capable of establishing,
the selecting means selects a frequency channel to be used on each link such that the frequency separation is performed between the some links of the second interface in frequency channels or frequency bands for which the frequency separation from the frequency channels currently being used on the links of the first interface is possible.

7. The communication device according to claim 6,
wherein the selecting means further selects a frequency channel for which the frequency separation is not possible and which is used for the second interface to establish a further link in addition to the some links, in frequency channels or frequency bands fir which the frequency separation from the frequency channels currently being used on the links of the first interface is possible.

8. The communication device according to any one of claims 3 to 7,
wherein in accordance with a determination result indicating that (i) a frequency channel for which the frequency separation from frequency channels currently being used on links of the first interface is possible can be selected and (ii) the frequency separation between links is not possible for all links with respect to a maximum number of links the second interface is capable of establishing,
the selecting means selects a single frequency channel for the second interface to establish a single link, in frequency channels or frequency bands for which the frequency separation from the frequency channels currently being used on the links of the first interface is possible.

9. The communication device according to any one of claims 3 to 7,
wherein in accordance with a determination result indicating that (i) frequency channels for which the frequency separation from frequency channels currently being used on links of the first interface is possible can be selected and (ii) the frequency separation between links is not possible for all links with respect to a maximum number of links the second interface is capable of establishing,
the selecting means selects a plurality of frequency channels for which the frequency separation is not possible and which is used for the second interface to establish a plurality of links, in frequency channels or frequency bands for which the frequency separation from the frequency channels currently being used on the links of the first interface is possible.

10. The communication device according to any one of claims 3 to 9,
wherein in accordance with a determination result indicating that frequency channels for which the frequency separation from frequency channels currently being used by links of the first interface is possible cannot be selected in frequency bands that the communication device is capable of using,
the selecting means selects any frequency channel in frequency bands that the communication device is capable of using, regardless of the frequency channels currently being used on the links of the first interface.

11. The communication device according to any one of claims 3 to 9,
wherein in accordance with a determination result indicating that frequency channels for which the frequency separation from frequency channels currently being used by links of the first interface is possible cannot be selected in frequency bands that the communication device is capable of using,
the selecting means disconnects some of a plurality of links currently being used by the first interface, and again selects frequency channels to be used on links of the second interface.

12. The communication device according to claim 11,
wherein the selecting means determines a link, among the plurality of links currently being used by the first interface, to disconnect, such that frequency channel for which frequency separation from frequency channels currently being used on links of the first interface is possible can be selected in frequency bands that the communication device is capable of using.

13. The communication device according to any one of claims 3 to 12,
wherein in accordance with a determination result indicating that the frequency separation between links is possible for some links with respect to a maximum number of links the second interface is capable of establishing, or that the frequency separation between links is not possible for all links with respect to the maximum number of links,
the selecting means disconnects some of a plurality of links currently being used by the first interface, and again selects frequency channels to be used on links of the second interface.

14. The communication device according to any one of claims 1 to 13,
wherein the first interface has a function for causing the communication device to operate as a station that connects to an external access point,
the second interface has a function for causing the communication device to operate as an access point that accepts a connection from an external station, and
the communication device further comprises control means for controlling the second interface to accept a connection from a counterpart device on frequency channels selected by the selecting means after the second interface has been started.

15. The communication device according to any one of claims 1 to 13,
wherein the first interface has a function for causing the communication device to operate as an access point that accepts a connection from an external station,
the second interface has a function for causing the communication device to operate as a station that connects to an external access point, and
the communication device further comprises control means for controlling the second interface to establish links with a counterpart device on frequency channels selected by the selecting means after the second interface has been started.

16. The communication device according to any one of claims 1 to 15,
wherein the communication device is capable of executing multi-link communication compliant with an IEEE 802.11 standard.

17. A method for controlling a communication device which is capable of executing multi-link communication using a plurality of parallel links established over mutually-different frequency channels, and which comprises first and second interfaces that are communication interfaces capable of being used for communication with mutually-different counterpart devices, the method comprising:
obtaining frequency separation information indicating frequency separation between links for enabling an STR operation of transmitting and receiving simultaneously on a plurality of links in a case of performing the multi-link communication; and
in a case where the second interface is started after the first interface has been started, selecting, based on the frequency separation information, frequency channels to be used on links of the second interface.

18. A program for causing a computer of a communication device to execute a method according to claim 17.
